Europäisches Patentamt

European Patent Office

Office européen des brevets

(11) Numéro de publication: **0 072 263**
A2

# (12) DEMANDE DE BREVET EUROPEEN

(21) Numéro de dépôt: 82401052.4

(22) Date de dépôt: 10.06.82

(51) Int. Cl.³: **A 23 L 3/00**, A 23 B 7/06, A 23 B 7/156

(30) Priorité: 07.08.81 FR 8115400

(43) Date de publication de la demande: 16.02.83 Bulletin 83/7

(84) Etats contractants désignés: **AT BE CH DE GB IT LI LU NL SE**

(71) Demandeur: **Société à Responsabilité Limitée SERATEC:Société dite, F-49350 Chenehutte Les Tuffeaux (FR)**

(72) Inventeur: **Blanchaud, Maurice, F-49250 Chenehutte Les Tuffeaux (FR)**
Inventeur: **Beauvais, Max, 9, rue de l'Argillière, F-27710 Saint Georges Motel (FR)**

(74) Mandataire: **Rodhain, Claude, Cabinet Claude RODHAIN 30, rue La Boétie, F-75008 Paris (FR)**

(54) Procédé et installation de traitement et de conservation de denrées telles que les champignons.

(57) Ce procédé est du type consistant à imprégner les champignons par une substance coagulable, à les blanchir, puis à en remplir une capacité, et enfin à les soumettre à un traitement de conservation.

Le problème posé consiste à accroître le rendement en poids obtenu par le procédé.

Suivant l'invention, on exécute l'imprégnation avec mise sous vide en une période de temps minimale, y inclus la mise sous vide (19), l'introduction (15) du liquide de traitement, un court maintien en contact et l'évacuation (16) du liquide.

L'invention trouve une application avantageuse dans le traitement des champignons.

Procédé et installation de traitement et de conservation de denrées telles que les champignons.

La présente invention concerne les procédés de traitement et de conservation de denrées périssables présentant des vides ou pores, telles que les champignons, notamment les champignons de couche ou champignons de Paris, du type consistant à imprégner les champignons par un liquide de traitement contenant une substance alimentaire susceptible de coaguler à la chaleur, avec mise sous vide préalable ou simultanée, à les soumettre ensuite à un blanchiment, puis à remplir à l'aide de ces champignons imprégnés et blanchis une capacité de conservation que l'on ferme, et enfin à les soumettre à un traitement de conservation, par exemple thermique. L'imprégnation permet d'accroître le poids des champignons et surtout, sous l'effet de la coagulation due au traitement thermique qui suit, d'obturer leurs pores et d'y conserver tous les constituants. La mise sous vide permet d'évacuer au moins une partie de l'air ou autre gaz contenu dans les vides et favorise donc l'imprégnation par ledit liquide. La substance coagulante utilisée est avantageusement du blanc d'oeuf, frais ou en poudre, mélangé à un liquide porteur tel que de l'eau ou du jus de champignons. Le blanchiment permet de détruire les diastases oxydantes et d'éviter des changements de couleur durant la conservation. Le traitement thermique (stérilisation, pasteurisation ou saumurage) permet l'arrêt du développement ou la destruction des ferments ou spores.

Ces procédés permettent avantageusement, grâce à la coagulation de la substance coagulante, tout d'abord de supprimer partiellement la perte de volume ou de poids qui résulte habituellement du blanchiment, par ailleurs de conserver les arômes, parfums et sucs contenus dans les champignons, et donc leur goût, et enfin d'éviter un noircissement après l'ouverture des conserves. A titre d'exemple, le gain de poids après traitement peut être de l'ordre de 15 % pour ces procédés connus.

On connaît déjà des procédés de ce type, par exemple par les brevets français n° 72 31 308 du 4 septembre 1972, ou n° 80 18 974 du 3 septembre 1980.

Dans ces procédés toutefois, le rendement, correspondant au gain en poids du produit final obtenu par rapport au poids initial, variait de 10 à 15 points au maximum. Le point est défini à partir du produit brut qui représente 100 points; le produit équeuté à traiter suivant le procédé correspond à 80 points et le produit emboîté (égoutté dans la boîte) obtenu par les procédés antérieurs sans imprégnation correspond à 55 points environ, valeur qui sert de base de référence aux conserveurs pour calculer le rendement. Ceci signifie que les procédés à imprégnation rappelés ci-dessus, qui permettent d'obtenir 60 à 70 points, donnent donc un gain de poids de 10 à 15 % par rapport aux 55 points de base.

C'est pourquoi la présente invention a pour but de permettre d'obtenir un rendement nettement supérieur, et ceci sans que ce gain ne s'accompagne des effets secondaires défavorables qui n'en justifiaient plus l'intérêt (ce qui était le cas avec les procédés précédents pour lesquels il n'était pas souhaitable de dépasser un gain de 15 %).

A cet effet, l'invention a pour objet un procédé du type précité, caractérisé en ce qu'on exécute l'imprégnation avec mise sous vide en une période de temps minimale constituée par le temps juste nécessaire, pour la valeur de vide utilisée, à la mise sous vide d'une enceinte d'imprégnation contenant les champignons, augmenté du temps juste nécessaire, pour la valeur de vide utilisée, à l'introduction du liquide de traitement dans cette enceinte et du temps juste nécessaire, pour la valeur de vide utilisée, à l'évacuation du liquide n'ayant pas imprégné les champignons avec une courte période intermédiaire de maintien en contact du liquide et des champignons entre cette introduction et cette évacuation. Ceci signifie que, à l'exception de cette période de maintien, la mise sous vide et l'introduction et l'évacuation du liquide doivent être exécutées dans les conditions les plus rapides possibles permises par la technique disponible. Bien entendu, le vide, qui favorise l'introduction du liquide par seul effet de dépression, doit être cassé dès la fin de la période de maintien, pour permettre l'évacuation du liquide restant.

Alors que les spécialistes en la matière pourraient penser que le rendement est d'autant plus élevé que la durée de l'imprégnation est importante, il a été constaté, de manière surprenante et contre toute attente, qu'en opérant de la manière indiquée ci-dessus, c'est-à-dire sous une période de temps la plus courte possible, que le rendement après blanchiment s'accroît très fortement, atteignant couramment 80 points (soit 100 % par rapport aux 80 points des champignons équeutés) et même 90 à 100 points (soit 111 à 125 %). Cette valeur peut toutefois retomber à 80 à 90 points après l'éminçage (qui d'ailleurs n'est pas effectué dans tous les cas) et le traitement thermique. Les valeurs après lavage et imprégnation peuvent elles-mêmes être de 160 à 180 % (en moyenne de 170 %) par rapport aux 80 points initiaux.

De manière particulièrement avantageuse également, on peut effectuer une mise sous vide très poussée atteignant 3 à 6 torrs. Dans ce cas, la mise sous vide est de préférence effectuée en un laps de temps de 30 à 45 secondes. Pour cette même profondeur de vide, la durée de la période intermédiaire de maintien est avantageusement de 5 secondes à une minute.

Avantageusement encore, il peut être prévu d'introduire dans l'enceinte d'imprégnation des champignons refroidis, par exemple maintenus au préalable au froid ou bien lavés en eau froide. La température des champignons et du liquide de traitement peut de préférence être d'environ 2 à 4°C. Cette disposition évite tout développement ultérieur des bactéries dans la substance coagulante. Il a de plus été constaté que, de manière inattendue, le rendement croît aussi notablement du fait de la profondeur de vide importante utilisée, par suite du refroidissement préalable des champignons et du liquide de traitement.

Il est clair que, avec les profondeurs de vide que l'on peut actuellement obtenir (4 torrs avec une pompe à anneau liquide équipée d'un éjecteur), on arrive toujours au point d'ébullition des champignons (de leur eau de constitution) pour cette valeur de vide. En effet, à 6 torrs le point d'ébullition est de 4°C, alors que, lorsqu'ils ont été lavés dans l'eau à l'ambiante, les champignons atteignent déjà une température de 10 à 12°C, ce qui correspond à environ 10 torrs pour l'ébullition.

En outre, l'exprérience prouve que, sans que l'on en connaisse très bien la raison, il est néfaste de maintenir les champignons au point d'ébullition, car cela diminue la rétention d'eau du champignon. C'est pourquoi il est impératif, suivant l'invention, d'introduire le liquide d'imprégnation le plus rapidement possible dès que le vide voulu est obtenu afin de ne pas rester à l'ébullition. Un tel maintien à l'ébullition entraînerait une chute notable du rendement.

On notera encore que la profondeur de vide à atteindre dépend de la température exacte d'ébullition des champignons qui elle-même varie avec les conditions de préparation de ces champignons, ou même au cours des périodes d'une fabrication continue, cette température pouvant par exemple varier de 2 à 4 ou 5°C. Cette valeur de vide peut par exemple varier de 6 à 15 torrs, mais il est clair que si l'on utilise une pompe à vide très puissante comme une pompe à vide à anneau liquide équipée d'un éjecteur, la puissance de cette pompe est telle que l'on obtient dans tous les cas l'ébullition en moins d'une minute, l'évaporation étant déjà nette à 20 ou 30 torrs et se prolongeant de manière exponentielle jusqu'au point d'ébullition.

Par ailleurs, et de manière toute aussi importante, il est essentiel, suivant l'invention, de maintenir le liquide et les champignons en contact pendant un temps qui peut varier de 5 secondes à une minute en fonction de la viscosité du liquide de traitement utilisé (dont la teneur est en général prévue variant de 4 à 11 % d'extrait sec dans le cas de l'albumine de blanc d'oeuf), la valeur moyenne étant d'environ 45 secondes.

L'invention a en outre pour objet une installation pour la mise en oeuvre du procédé considéré, caractérisée en ce qu'elle comprend une enceinte d'imprégnation comportant des moyens d'introduction des champignons, une source de liquide de traitement reliée à cette enceinte par l'intermédiaire de tuyauteries d'alimentation et de retour, et enfin des moyens de mise sous vide et des moyens de mise à l'air également reliés à cette enceinte.

De manière particulièrement avantageuse, quatre vannes de commande peuvent être interposées respectivement sur les tuyauteries d'alimentation et de retour et sur des tuyauteries de mise sous vide et de mise à l'air. De préférence, ces vannes sont des vannes pneumatiques, reliées à un programmateur cyclique réglant leurs ouvertures et fermetures.

Suivant un mode de réalisation particulier de l'invention, il peut être prévu, entre l'enceinte d'imprégnation et la pompe, un vase d'expansion sur lequel, lorsqu'il en est prévu, sont également montées des vannes de mise sous vide et de mise à l'air. Grâce à ce vase d'expansion, la mousse qui se forme dans l'enceinte lors de l'introduction du liquide de traitement et qui a tendance à pénétrer dans la pompe, ne risque plus de réduire le vide obtenu. En effet, dès que i'enceinte est mise à la pression atmosphérique, la mousse se trouve repoussée vers l'évacuation de liquide.

D'autres caractéristiques et avantages de l'invention ressortiront de la description qui va suivre, à titre d'exemple non limitatif, et en regard des dessins annexés sur lesquels :

- La Fig. 1 représente un schéma par blocs d'une installation de traitement conforme à l'invention et permettant la mise en oeuvre d'un procédé conforme à l'invention.

- La Fig. 2 représente une vue de dessus générale de l'appareillage de mise sous vide et imprégnation de cette installation.

- Les Fig. 3 et 4 représentent des vues en élévation, respectivement de face et de côté, et à plus grande échelle, de cet appareillage de mise sous vide et imprégnation.

- Les Fig. 5 et 6 représentent des vues, également en élévation, de côté et de face, cette dernière partielle, de l'enceinte d'imprégnation de cet appareillage.

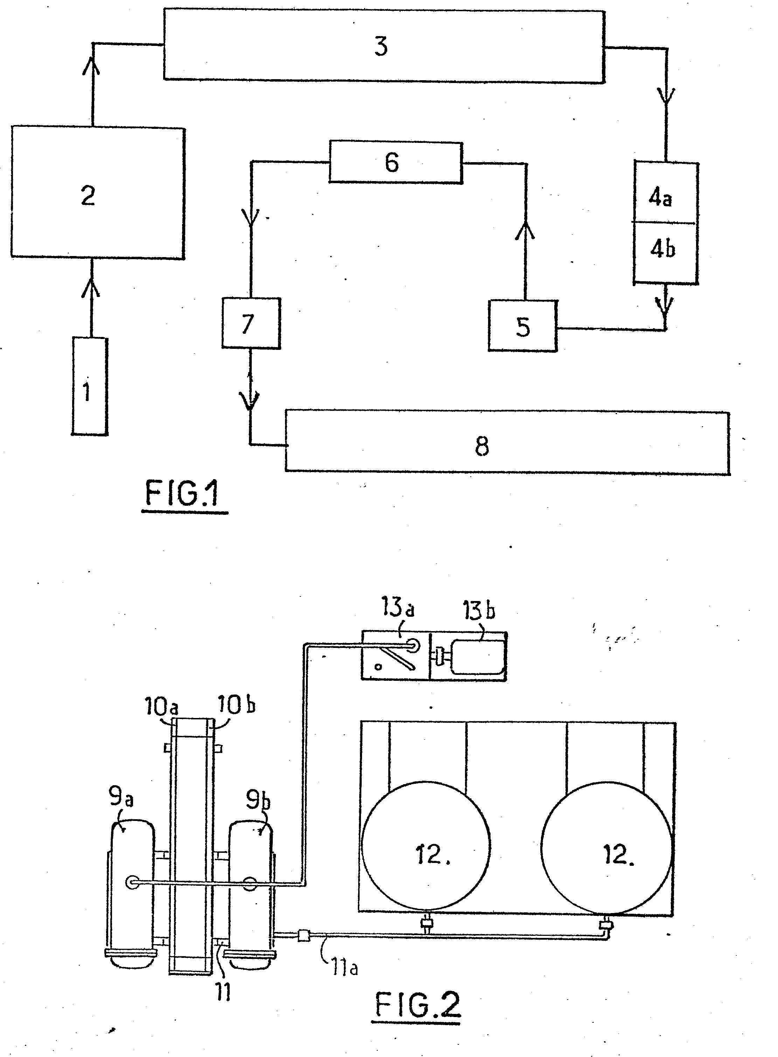

L'installation schématisée à la Fig. 1 comprend une chaîne continue d'appareillages respectivement constitués par :

- un laveur 1 de champignons,
- un appareillage de mise sous vide et imprégnation 2,
- un appareil de blanchiment 3,
- un appareil d'éminçage 4a et un laveur associé 4b,
- un appareil de remplissage de boîtes de conserve en champignons 5,
- un appareil de jutage 6,
- un obturateur de boîtes de conserve 7,
- un appareillage de pasteurisation 8.

Comme le représente plus particulièrement la Fig. 2, l'appareillage de mise sous vide et imprégnation 2 comprend deux enceintes d'imprégnation 9a et 9b, destinées à fonctionner en alternance, et disposées de part et d'autre d'un double convoyeur 10a-10b d'alimentation et d'évacuation de paniers de champignons, l'ensemble étant disposé au-dessus d'une cuve de liquide de traitement 11, qui est elle-même reliée par une tuyauterie d'alimentation 11a à deux réservoirs-mélangeurs 12 de liquide de traitement (alimentés par une pompe et un échangeur qui refroidit l'eau destinée au mélange), tandis qu'une pompe à vide 13 munie de son groupe moteur d'entraînement 13a est schématiquement représentée reliée aux deux enceintes 9a et 9b. Les réservoirs-mélangeurs 12 sont destinés à contenir un liquide de traitement constitué par une solution d'eau refroidie et d'albumine et plus particulièrement de blanc d'oeuf, à raison de 4 à 11 % d'extrait sec, cette solution étant maintenue à froid, soit à une température pouvant varier par exemple de 2 à 4°C.

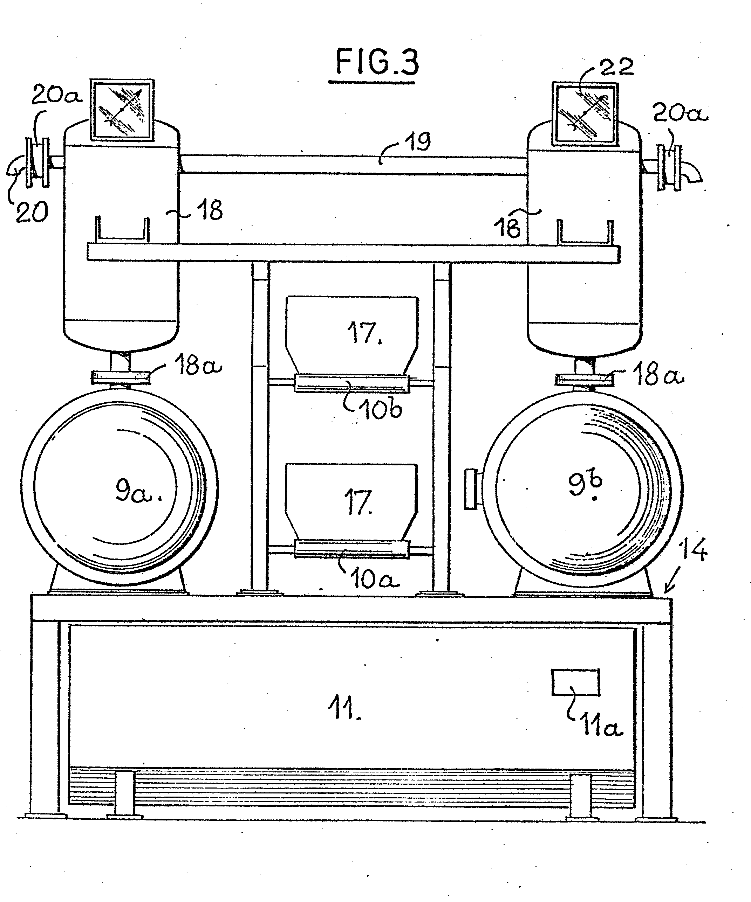

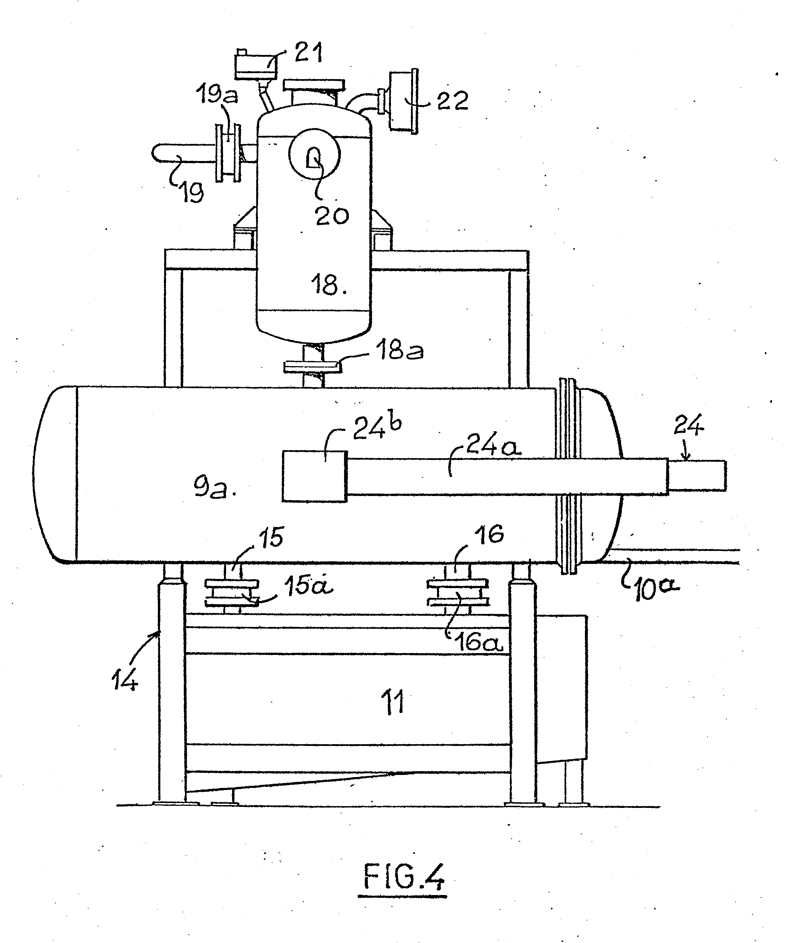

Comme le montrent plus précisément les Fig. 3 et 4, l'ensemble de mise sous vide et imprégnation proprement dit est monté sur une infrastructure 14 à trois niveaux. Au niveau inférieur se trouve disposée la cuve de liquide de traitement 11, à l'intérieur de laquelle plongent deux paires de tuyauteries, respectivement d'alimentation 15 et de retour 16, chaque paire de tuyauteries pénétrant par ailleurs dans le fond des enceintes d'imprégnation 9a et 9b. Des vannes de régulation, respectivement d'alimentation 15a et de retour 16a sont interposées sur ces mêmes tuyauteries.

Sur le niveau intermédiaire de l'infrastructure 14, se trouvent disposés dans la partie médiane, et l'un au-dessus de l'autre, le convoyeur d'alimentation 10a et le convoyeur d'évacuation 10b, ces convoyeurs étant du type à rouleaux et permettant le transfert de paniers métalliques 17, destinés à contenir les champignons parés à traiter (équeutés), ces paniers étant dimensionnés de façon à pouvoir être introduits à l'intérieur des enceintes 9a ou 9b.

Ces dernières enceintes 9a et 9b sont disposées au niveau intermédiaire, de part et d'autre des convoyeurs et elles présentent plus particulièrement une structure qui sera décrite ci-dessous.

A la partie supérieure de l'infrastructure, sont supportés deux vases d'expansion 18 dont chacun est disposé au-dessus de l'une des enceintes 9a et 9b et raccordé à cette dernière par des accouplements à brides 18a.

A titre indicatif, chaque panier 17 peut contenir dix kilos de champignons parés et chaque enceinte 9a, 9b, qui se présente sous une forme générale cylindrique, est munie intérieurement de glissières pour recevoir ces paniers, et est elle-même dimensionnée de manière à recevoir quatre de ces paniers, soit quarante kilos. Le volume intérieur total d'une enceinte est suffisamment élevé pour que, lorsqu'une telle enceinte est partiellement remplie de liquide de trai- ment, le volume de ce liquide soit par exemple de l'ordre de deux cent quarante litres. Ce volume est largement suffisant pour permettre l'imprégnation envisagée, puisque couramment, suivant le processus opératoire envisagé, les quarante kilos de champignons contenus dans une enceinte peuvent absorber vingt à trente-deux litres de liquide de traitement.

En ce qui concerne d'ailleurs ce dernier, on pourrait envisager d'utiliser non pas un extrait sec d'albumine, mais du blanc d'oeuf lui-même, auquel cas la teneur de la solution conservée dans les réservoirs mélangeurs 12 serait de 42 % (contre 6 % dans le cas d'extrait sec). Ce dernier liquide de traitement est maintenu dans la cuve 11, sous un effet permanent de charge à partir de ces réservoirs-mélangeurs 12 et avec également un maintien automatique de niveau obtenu à l'aide d'un régulateur 11a.

Les paniers pleins 17 sont amenés par le convoyeur inférieur 10a, situé exactement au niveau des enceintes 9a et 9b, à partir du poste de lavage initial 1. Ces paniers sont introduits alternativement dans l'une et l'autre des enceintes par un seul et même opérateur, et ceci d'une manière qui sera décrite plus loin, les paniers contenant les champignons traités au cours de la phase précédente et qui sont retirés alternativement de chaque enceinte étant immédiatement transportés vers l'appareillage de blanchiment 3. Les paniers ainsi vidés de leurs champignons à l'entrée de cet appareillage, sont renvoyés à l'aide du convoyeur supérieur 10b vers l'alimentation en champignons que constitue le poste de lavage 1.

Comme le montrent encore les Fig. 3 et 4, chacun des vases d'expansion 18, dont le volume est par exemple de l'ordre de grandeur du septième de celui d'une enceinte d'imprégnation, est équipé d'une part d'une tuyauterie de mise sous vide 19, reliée à la pompe à vide 13a, et d'autre part d'une tuyauterie de mise à l'atmosphère 20, des vannes respectivement de vide 19a et de mise à l'atmosphère 20a étant interposées sur ces tuyauteries. Il est également prévu pour chaque enceinte d'imprégnation 9a, 9b, un pressostat 21 et un vacuummètre.

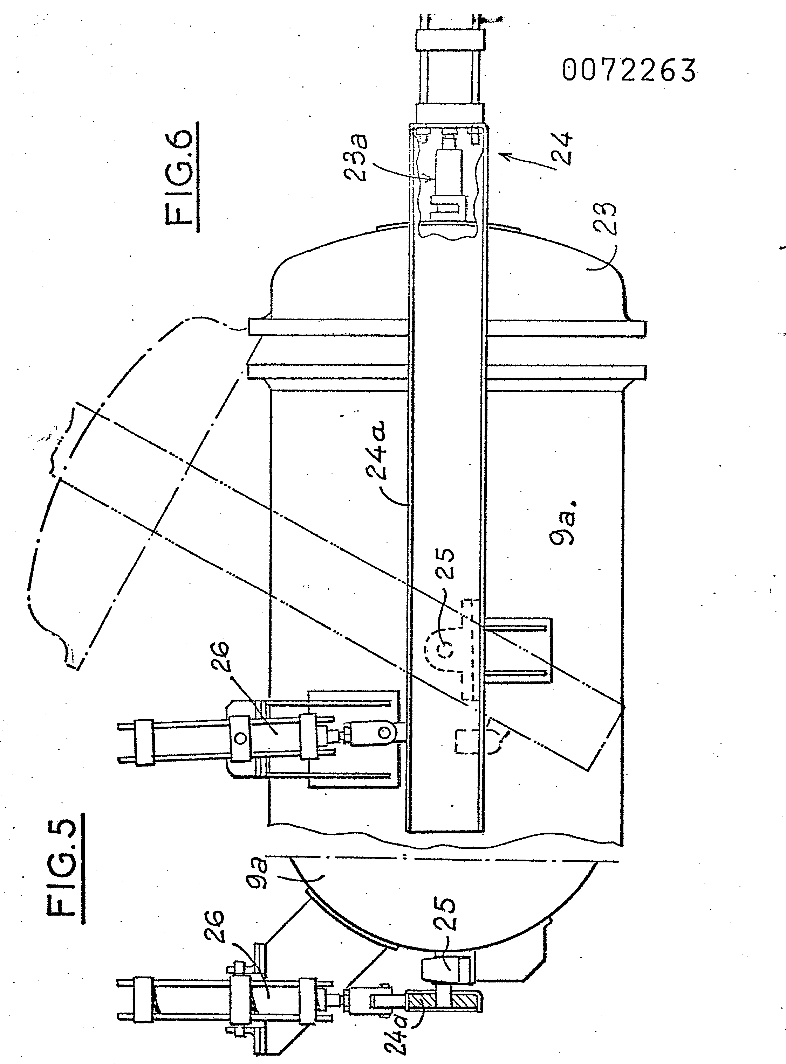

Comme le montrent plus précisément les Fig. 5 et 6, chaque enceinte d'imprégnation, par exemple 9a, est constituée par un corps résistant au vide de forme cylindrique, à axe horizontal, dont l'un des fonds est fermé, tandis que l'autre est obturé par un couvercle mobile 23. Ce dernier est porté, par l'intermédiaire d'un vérin d'ouverture-fermeture 23a, par la base d'un support en forme d'U 24, constitué de fers rigides et dont les deux longerons 24a, munis de contrepoids 24b, sont normalement orientés dans le plan horizontal contenant l'axe du cylindre, en étant montés pivotants autour d'un axe horizontal perpendiculaire à l'axe du cylindre, sur des tourillons 25 fixés de part et d'autre de l'enceinte. Un vérin de basculement 26 se trouve par ailleurs fixé sur l'un des côtés de l'enceinte, de manière à attaquer l'une des extrémités libres des ailes 24a qui se prolongent au-delà des paliers 25. L'actionnement de ce dernier vérin permet le relèvement du support 24 et du couvercle 23 qu'il porte, vers le haut, dans la position représentée en trait mixte sur la Fig. 5 dans laquelle ce couvercle dégage entièrement l'entrée de l'enceinte 9a.

L'appareillage est complété par un programmateur cyclique non représenté, auquel sont reliées les vannes d'alimentation en liquide de traitement 15a, les vannes de retour de liquide de traitement 16a, les vannes de mise sous vide 19a, les vannes de mise à l'atmosphère 20a et les vérins d'ouverture-fermeture du couvercle 23a et 26.

Enfin la pompe de vide 13a est constituée par une pompe à anneau liquide munie d'un éjecteur.

Le programmateur cyclique est agencé de manière à permettre le fonctionnement continu et régulier suivant de l'appareillage :

Le programmateur actionne tout d'abord successivement les vérins 23a et 26 qui dégagent le couvercle 23 de l'enceinte 9a, puis le bascule vers le haut (Fig. 5). L'opérateur peut alors évacuer les paniers 17 contenus dans l'enceinte (9a, par exemple) et les transférer vers le poste de blanchiment 3, puis introduire dans cette même enceinte d'autres paniers 17 amenés par le convoyeur 10a. L'ensemble de ces opérations de déchargement et de chargement étant effectué au bout d'une période de par exemple 30 secondes, le programmateur actionne à nouveau en sens inverse les vérins 26 et 23a provoquant la fermeture de l'enceinte. Le programmateur actionne alors l'ouverture de la vanne de mise sous vide 19a associée à l'enceinte considérée, ce qui permet à la pompe 13a d'amener très rapidement le volume intérieur de l'enceinte sous un vide qui descend de manière extrêmement rapide à 100 torrs en 5 secondes, puis à 6 torrs en 25 à 40 secondes. Dès que le vide dans l'enceinte a atteint 6 torrs, le pressostat 21 commande alors l'ouverture de la vanne d'alimentation associée 15a, ce qui permet, grâce à la dépression existant dans l'enceinte, une remontée par aspiration du liquide de traitement contenu dans la cuve 11, jusqu'à ce qu'il recouvre les champignons contenus dans les paniers, jusqu'à quelques centimètres au-dessus des grilles recouvrant ces derniers. Le programmateur déclenche alors la fermeture de la vanne de mise sous vide 19a. Bien entendu pendant la montée du liquide, le vide a continué de se développer à l'intérieur de l'enceinte par condensation des gaz condensables.

Simultanément à la fermeture de la vanne de mise sous vide 19a, le programmateur ferme également automatiquement la vanne d'alimentation de liquide 15a. Après une période de maintien en contact des champignons avec le liquide de l'ordre de 45 secondes, obtenu à l'aide du programmateur, ce dernier provoque alors l'ouverture de la vanne de mise à l'atmosphère 20a, ce qui casse le vide de l'enceinte. Pendant cette période de maintien, ainsi que pendant la période de montée du liquide qui précédait, ce liquide a imprégné les corps des champignons, son niveau redescendant de quelques centimètres à la fin de la période de maintien.

Simultanément à l'ouverture de la vanne de mise à l'atmosphère 20a, le programmateur commande l'ouverture de la vanne de retour associée 16a qui permet alors la descente du liquide restant jusque dans la cuve 11.

La durée de l'ensemble de ces opérations automatiques, depuis la mise sous vide et jusqu'à la fin de la descente du liquide, est par exemple d'environ 160 secondes, de sorte que, y compris le chargement et le déchargement, la durée de l'ensemble d'un cycle de fonctionnement est de l'ordre de 190 secondes. L'autre enceinte d'imprégnation 9b et l'ensemble des organes qui y sont associés, sont soumis à un cycle de fonctionnement analogue qui, par l'intermédiaire du programmateur, est décalé d'un demi-cycle de manière à permettre un travail alterné de l'opérateur pour décharger et charger chacune des enceintes.

Grâce à la cadence extrêmement rapide de ces cycles, et en utilisant pour chaque enceinte quatre paniers de dix kilos de champignons, il est ainsi possible de traiter une tonne et demie de champignons équeutés à l'heure.

REVENDICATIONS

1°) - Procédé de traitement et de conservation de denrées périssables présentant des vides ou pores, du type consistant à imprégner (2) les champignons par un liquide de traitement contenant une substance alimentaire susceptible de coaguler à la chaleur, avec mise sous vide préalable ou simultanée, à les soumettre ensuite à un blanchiment (3), puis à remplir (5) à l'aide de ces champignons imprégnés et blanchis une capacité de conservation que l'on ferme (7), et enfin à les soumettre à un traitement de conservation (8), caractérisé en ce qu'on exécute l'imprégnation (2) avec mise sous vide en une période de temps minimale constituée par le temps juste nécessaire, pour la valeur de vide utilisée, à la mise sous vide (19) d'une enceinte d'imprégnation (9a, 9b), contenant les champignons, augmenté du temps juste nécessaire, pour la valeur de vide utilisée, à l'introduction (15) du liquide de traitement dans cette enceinte et du temps juste nécessaire, pour la valeur de vide utilisée, à l'évacuation (16) du liquide n'ayant pas imprégné les champignons avec une courte période intermédiaire de maintien en contact du liquide et des champignons entre cette introduction (15) et cette évacuation (16).

2°) - Procédé selon la revendication 1, caractérisé en ce que l'évacuation (16) du liquide n'ayant pas imprégné les champignons est effectuée dès qu'est terminée l'introduction (15) du liquide de traitement dans l'enceinte (9a, 9b).

3°) - Procédé selon l'une quelconque des revendications 1 et 2, caractérisé en ce que, l'introduction (15) du liquide de traitement dans l'enceinte (9a, 9b) s'effectuant sous le seul effet de la mise sous vide de cette enceinte, l'évacuation (16) du liquide n'ayant pas imprégné les champignons s'obtient en cassant le vide.

4°) - Procédé selon l'une quelconque des revendications 1 à 3, caractérisé en ce qu'on effectue une mise sous vide (19) très poussée atteignant 3 à 6 torrs.

5°) - Procédé selon la revendication 4, caractérisé en ce que la mise sous vide (19) est effectuée en un laps de temps de 20 à 45 secondes.

6°) - Procédé selon l'une quelconque des revendications 1 à 5, caractérisé en ce que la durée du temps de maintien est de 5 secondes à une minute.

7°) - Procédé selon l'une quelconque des revendications 1 à 6, caractérisé en ce que les champignons et le liquide de traitement que l'on introduit dans l'enceinte d'imprégnation (9a, 9b) ont été maintenus au préalable au froid (11-12).

8°) - Procédé selon la revendication 7, caractérisé en ce que la température de maintien au froid (11-12) est d'environ 2 à 4°C.

9°) - Installation pour la mise en oeuvre d'un procédé selon l'une quelconque des revendications 1 à 8, caractérisée en ce qu'elle comprend une enceinte d'imprégnation (9a, 9b) comportant des moyens (23) d'introduction des champignons, une source (11) de liquide de traitement reliée à cette enceinte par l'intermédiaire de tuyauteries d'alimentation (15) et de retour (16), et enfin des moyens de mise sous vide (19) et des moyens de mise à l'air (20) également reliés à cette enceinte.

10°) - Installation selon la revendication 9, caractérisée en ce que quatre vannes de commande (15a, 16a, 19a, 20a) peuvent être interposées respectivement sur les tuyauteries d'alimentation (15) et de retour (16) et sur des tuyauteries de mise sous vide (19) et de mise à l'air (20).

11°) - Installation selon la revendication 10, caractérisée en ce que les vannes (15a, 16a, 19a, 20a) sont des vannes pneumatiques, reliées à un programmateur électronique réglant leurs ouvertures et leurs fermetures.

12°) - Installation selon l'une quelconque des revendications 9 à 11, caractérisée en ce que la source de vide (13a) est constituée par une pompe à anneau liquide avec éjecteur.

13°) - Installation selon l'une quelconque des revendications 9 à 12, caractérisée en ce qu'il est prévu dans l'enceinte d'imprégnation (9a, 9b) un pressostat et un vacuummètre.

14°) - Installation selon l'une quelconque des revendications 9 à 13, caractérisée en ce qu'un vase d'expansion (18) est disposé entre l'enceinte d'imprégnation (9a, 9b) et la source de vide (13a).

FIG.1

FIG.2

0072263

## FIG.3

FIG.4

FIG.5

FIG.6

0072263